# EUROPEAN PATENT APPLICATION

(11) **EP 4 468 203 A1**
(43) Date of publication of application: **27.11.2024**
(21) Application number: 22927855.1
(22) Date of filing: 28.02.2022
(51) Int. Cl.: G06N 3/02

(54) **ANOMALY DETECTION METHOD AND APPARATUS, COMPUTER-READABLE MEDIUM AND ELECTRONIC APPARATUS**

(71) Applicant: Siemens Aktiengesellschaft, 80333 München (DE)
(72) Inventor: LI, Huanlun, Suzhou Jiangsu 215000 (CN); XU, Weifeng, Shanghai 200940 (CN); LI, Jing, Shanghai 201208 (CN)
(74) Representative: Isarpatent
(86) International application number: PCT/CN2022/078309
(87) International publication number: WO 2023/159574

(57) **Abstract**

Embodiments of the present application relate to quality detection technology, and in particular relate to an anomaly detection method and apparatus, a computer-readable medium and an electronic apparatus. In the method, a knowledge graph is established according to data required for the production of a product; measured values of a plurality of nodes in the knowledge graph in an upstream inspection process are obtained; feature deviation values of each of the plurality of nodes is calculated according to the measured values of the plurality of nodes in the upstream inspection process; a degree of similarity between any two nodes in the knowledge graph is calculated; and anomaly probabilities of the respective nodes are outputted by means of a graph neural network according to the feature deviation values of each of the plurality of nodes and the degree of similarity between any two nodes.

## Description

### Technical Field

Embodiments of the present application mainly relate to the technical field of quality inspection, and in particular relate to an anomaly detection method and apparatus, a computer-readable medium and an electronic apparatus.

### Background Art

With the development of the modern manufacturing industry, product structures and processes are increasingly complicated, and the corresponding production is also done at much greater scales, and how to accurately and effectively perform product quality inspection has become increasingly important and challenging. Especially for enterprises having a large quantity of complicated assembly parts, quality inspection not only requires a large amount of expert knowledge, but also it is usually necessary to choose between quantity and quality inspection and production efficiency.

At present, most manufacturers choose a quality inspection method of spot checks on workpieces, then targeted checks of some components by specialized personnel, and finally overall performance testing of the final product. Although time is saved on, such a method relies excessively on the experience of specialized personnel, and it is difficult to locate anomaly issues which have happened very little or not been recorded; additionally, it is also difficult to trace back to the root cause of the quality issue.

### Summary of the Invention

Embodiments of the present application provide an anomaly detection method and apparatus, a computer-readable medium and an electronic apparatus, used for solving the problem of how to accurately and effectively locate a relevant anomaly present in a product production process.

In a first aspect, an anomaly detection method is provided, the method comprising: creating a knowledge graph according to data required to produce a product; acquiring measured values of multiple nodes in the knowledge graph in an upstream inspection process; according to the measured values of the multiple nodes in the upstream inspection process, calculating a characteristic deviation value of each of the multiple nodes; calculating a similarity degree between any two nodes in the knowledge graph; and according to the characteristic deviation value of each of the multiple nodes and the similarity degree between said any two nodes, outputting anomaly probabilities of respective nodes by means of a graph neural network.

A second aspect provides an electronic apparatus comprising: at least one memory, which is configured to store a computer-readable code; and at least one processor, which is configured to call the computer-readable code, and execute steps in the method provided by the first aspect.

A third aspect provides a computer-readable medium, a computer-readable instruction being stored on the computer-readable medium, and when the computer-readable instruction is executed by a processor, the processor executing steps in the method provided by the first aspect.

A fourth aspect provides an anomaly detection apparatus comprising component parts used for executing the steps of the method provided by the first aspect.

By means of the embodiments of the present application, relevant anomaly issues present in a product production process can be accurately and efficiently located.

### Brief Description of the Drawings

The following drawings are only intended to schematically illustrate and explain the embodiments of the present application, and not limit the scope of the embodiments of the present application, wherein:
Fig. 1 is a flowchart of an anomaly detection method according to an embodiment of the present application;
Fig. 2 is a schematic drawing of a knowledge graph relating to automobile production according to an embodiment of the present application;
Fig. 3 is a schematic drawing of current deviation values of corresponding nodes according to an embodiment of the present application;
Fig. 4 is a schematic drawing of anomaly detection results according to an embodiment of the present application;
Fig. 5 is a schematic drawing of an anomaly detection apparatus according to an embodiment of the present application; and
Fig. 6 is a schematic drawing of an electronic apparatus according to an embodiment of the present application.

### Key to the drawings

| | | |
|---|---|---|
| 100: anomaly detection method | 110-150: method steps | |
| 50: anomaly detection apparatus | 51: pre-creation module | 52: acquisition module |
| 53: calculation module | 54: prediction module | |
| 600: electronic apparatus | 610: processor | 620: memory |

### Particular Embodiments

The subject matter described herein is now discussed with reference to demonstrative embodiments. It should be understood that these embodiments are discussed solely in order to enable those skilled in the art to better understand and thereby implement the subject matter described herein, and do not restrict the scope of protection expounded in the Claims, suitability or examples. The function and arrangement of elements discussed may be changed without departing from the scope of protection of the content of the embodiments of the present application. Various processes or components may be omitted, replaced or added as required in the various examples. For example, the method described may be executed in a sequence different from the sequence described, and various steps may be added, omitted or combined. Furthermore, features described relative to some examples may also be combined in other examples. As used herein, the term "comprises" and variants thereof signify an open term, with the meaning being "comprising but not limited to". The term "on the basis of" means "at least partially on the basis of". The terms "one embodiment" and "an embodiment" mean "at least one embodiment". The term "another embodiment" means "at least one other embodiment". The terms "first", "second", etc. may denote different or identical objects. Other definitions, explicit or implicit, may be included below. Unless clearly specified in the context, the definition of one term is consistent throughout the Description.

The embodiments of the present application are described in detail below in conjunction with the drawings.

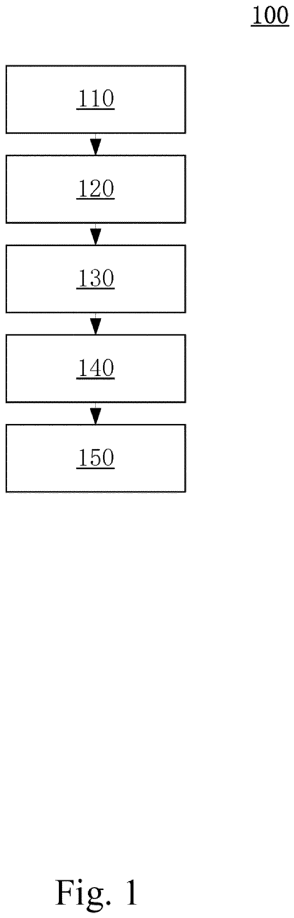

Fig. 1 is a flowchart of an anomaly detection method according to an embodiment of the present application; as shown in Fig. 1, the anomaly detection method comprises:
Step 110, creating a knowledge graph according to data required to produce a product.

The data required to produce a product comprises: product composition, product processing production workflow and data in the product production process.

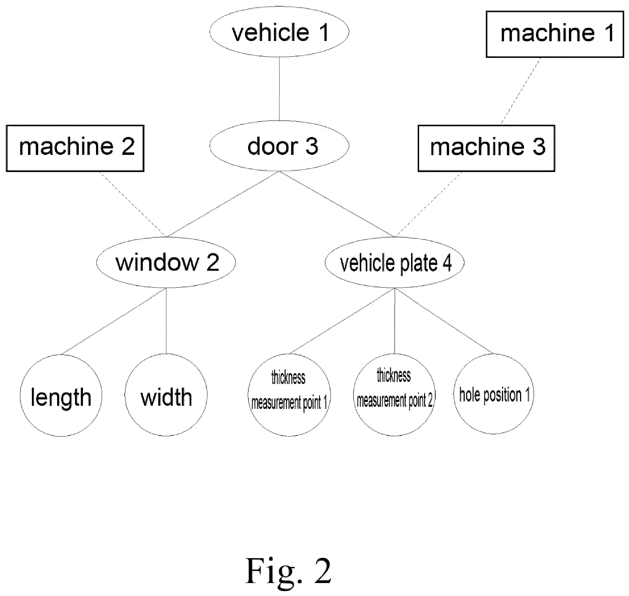

The knowledge graph of the relevant product is intended to establish an association relationship between relevant product entities, systematically organize the knowledge herein, allow the knowledge to be more easily understood and processed by a machine, and facilitate data search, mining, analysis, etc. Optionally, Fig. 2 is a schematic drawing of a knowledge graph relating to automobile production according to an embodiment of the present application; as shown in Fig. 2, data required for producing an automobile comprises assembly components, such as a window 2, a door 3 and a vehicle plate 4, and may further comprise different characteristics of the assembly components, such as the length and width of the window 2, and association relationships between the relevant products, components and parts (shown with solid lines). Secondly, Fig. 2 further comprises a machine 1, a machine 2 and a machine 3 used in the automobile processing production workflow, and relationships between the relevant machines and relevant product parts (shown with dotted lines). In addition, data required to produce an automobile further comprises data in the product production process, wherein the word "product" refers to products in a broad context, and, as well as "product" in a narrow context, further comprises relevant parts and components. It should be noted that the word "product" always refers to products in the broad context when mentioned hereinafter. The data in the product production process may comprise: production quantity, batch number, production time and data recorded in a manual checking process, etc.; product process data may comprise: product dimensions, machine setting parameters, information of affiliated workstation, etc.

By means of receiving the data required to produce a product, the relevant knowledge graph may be directly created. Optionally, an ontology may further be created according to product composition and product processing production workflow. By means of performing data fusion on data in the product production process and the ontology, a database is created. Data fusion is performed on multi-source heterogenous data in the database, to obtain data of a unified structure. According to the data of said unified structure, a knowledge graph is created/a preset knowledge graph is updated.

The product composition may comprise: various portions of the product composition and an assembly relationship between the various portions of the product composition. The product processing production workflow comprises: various devices required for producing a product and a production relationship between the various devices and the various portions of the product composition. In the fields of computer science and information science, in theory, an "ontology" refers to a "formalized, clear and detailed description of a shared conceptual system". An ontology normally may be used to define these fields and may model these fields. Ontology is a formalized representation of types of objects, concepts or attributes and relationships therebetween in a specific field, where knowledge of a field in which people are interested is taken as source material. Normally, an ontology may act as a basis for creating a relevant knowledge graph.

Optionally, performing data fusion on multi-source heterogenous data in a database may comprise normalizing nodes, and then using a transformation matrix on the basis of a difference between different feature spaces, to obtain data of a unified structure.

Optionally, before performing data fusion on multi-source heterogeneous data in a database, a data range chosen by a user may also be received, for example, a relevant production batch number or production time, etc., and data fusion is performed on multi-source heterogeneous data in the data range chosen by the user in the database.

Step 120, acquiring measured values of multiple nodes in the knowledge graph in an upstream inspection process.

Each component part in the knowledge graph may be called a node. "Measured values" in the upstream inspection process refer to measured values output after a user/relevant machine inspects a relevant product in an upstream product production process. The measured values may also be descriptive language, such as referring to the presence of a serious scratch/dent.

Step 130, according to the measured values of the multiple nodes in the upstream inspection process, calculating a characteristic deviation value of each of the multiple nodes.

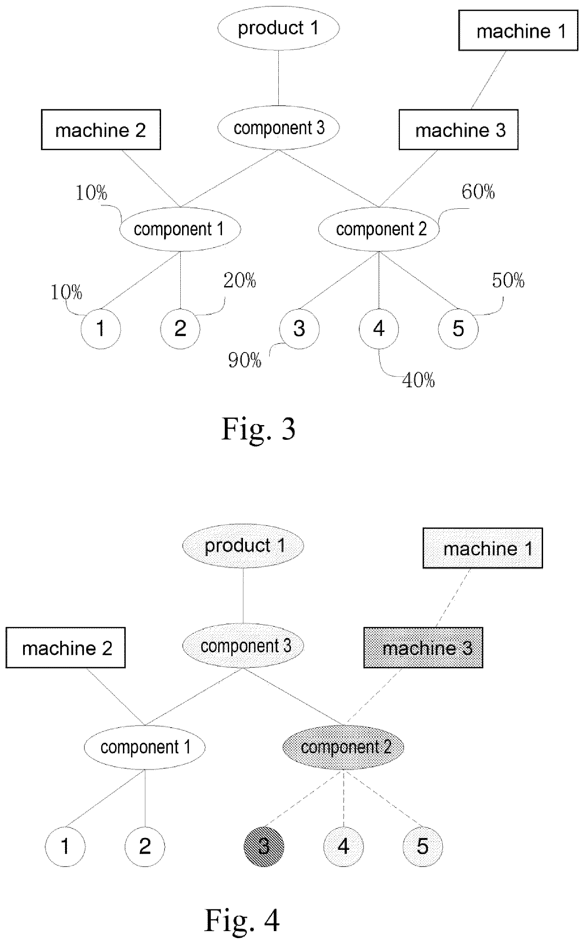

An average value of historical inspection data of a corresponding product of each node of measured values in an upstream inspection process in a knowledge graph may be taken as a reference, and by means of normalization, for example with a z-score formula, a current deviation value of the corresponding node is calculated. The calculated current deviation value of the corresponding node may be as shown in Fig. 3, or may be embodied in another digital form.

Optionally, all the characteristic deviation values of each of the multiple nodes may be calculated simultaneously. Since multiple measured values may be recorded for some nodes in the upstream inspection process, in this scenario, the corresponding characteristic deviation values of all measured values may all be calculated.

The characteristic deviation values may help to find scenarios where the measured value of the corresponding node is in the process standard range but deviates from an average value of historical inspection data, thereby exposing a potential defect. Step 140, calculating a similarity degree between any two nodes in the knowledge graph.

A similarity degree calculation method may be used to calculate a similarity degree between any two nodes, by means of comparing characteristic values of the two nodes, according to actual data attributes. The similarity degree calculation method comprises a Jaccard similarity coefficient, a relevant distance or a cosine distance, etc. Thus, natural language is converted into computable input.

Step 150, according to the characteristic deviation value of each of the multiple nodes and the similarity degree between said any two nodes, outputting anomaly probabilities of respective nodes by means of a graph neural network.

Specifically, a characteristic deviation value may act as a node attribute, a similarity degree as a weight on an edge between the any two nodes, and a graph after corresponding fusion as a skeleton structure, to finally form an input graph required by a graph neural network.

Optionally, the graph neural network may be a graph neural network having a propagation algorithm, for example, an approximation personalized neural network (approximation personalized propagation of neural predictions, APPNP), a graph convolutional network (GCN) or a recursive graph neural network (graph recurrent attention networks, GRAN), etc.

Optionally, anomaly probabilities of the respective nodes may be displayed on a user interface in different colors, for example as shown in Fig. 4; for example, nodes of a high anomaly probability may be marked as red, and nodes of a low anomaly probability may be marked as green, to allow a user to intuitively monitor the specific situation of the nodes.

Embodiments of the present application take measured values of multiple nodes in the upstream inspection process as initial values, in addition to the similarity degree between any two nodes in the knowledge graph as a reference, use a graph neural network to perform propagation thereon, and generate corresponding anomaly probabilities for other nodes in the knowledge graph, which may help a user, when faced with a situation of process production of a large batch of products, to accurately and quickly locate anomalous products, machines or stations in the product production process, which can thus significantly increase the efficiency of an inspection workshop, and effectively reduce possible missed faults and hidden issues not found before, etc.

After step 150, the anomaly detection method may further comprise: determining anomaly paths according to the anomaly probabilities of the respective nodes.

The respective paths in the knowledge graph may be arranged in order according to how many anomaly nodes are contained therein, and the first K anomaly paths are output, wherein K ≥ 1.

Optionally, the anomaly probabilities of the respective nodes may be respectively mapped onto corresponding nodes in the knowledge graph. A first anomaly node is determined in the knowledge graph, wherein the first anomaly node comprises: a node of which the anomaly probability exceeds a preset threshold value. If the first path in the knowledge graph contains a preset number of first anomaly nodes, the first path is determined to be an anomaly path.

The anomaly paths may be marked with different colors on the user interface; in particular, station nodes and production lines that process/produce multiple anomalous products are prominently displayed. Optionally, different line types may further be used to prominently display anomaly paths, such as the anomaly path marked with a dotted line in Fig. 4. Thus, a user is further aided in product inspection of large batches to quickly locate relevant products, machines or stations, etc. which are most likely to have an anomaly; in addition, use of a visual method can be more intuitive, and the user experience is better.

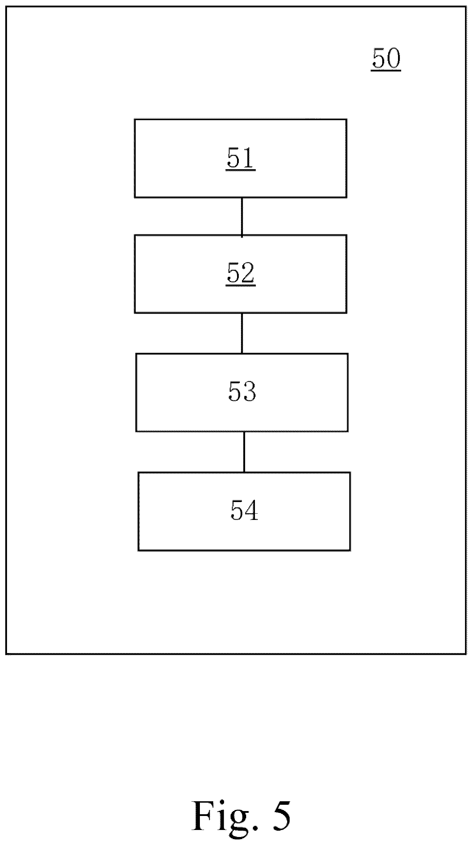

Fig. 5 is a schematic drawing of an anomaly detection apparatus 50 according to an embodiment of the present application; as shown in Fig. 5, the anomaly detection apparatus 50 comprises: A pre-creation module, which is configured to: create a knowledge graph according to data required to produce a product. An acquisition module, which is configured to: acquire measured values of multiple nodes in the knowledge graph in an upstream inspection process.

A calculation module, which is configured to: calculate a characteristic deviation value of each of the multiple nodes, according to the measured values of the multiple nodes in the upstream inspection process; and calculate a similarity degree between any two nodes in the knowledge graph.

A prediction module, which is configured to: output anomaly probabilities of respective nodes by means of a graph neural network, according to the characteristic deviation value of each of the multiple nodes and the similarity degree between said any two nodes.

Reference may be made to the above-described anomaly detection method for other processes of the above modules, which are not unnecessarily detailed again here.

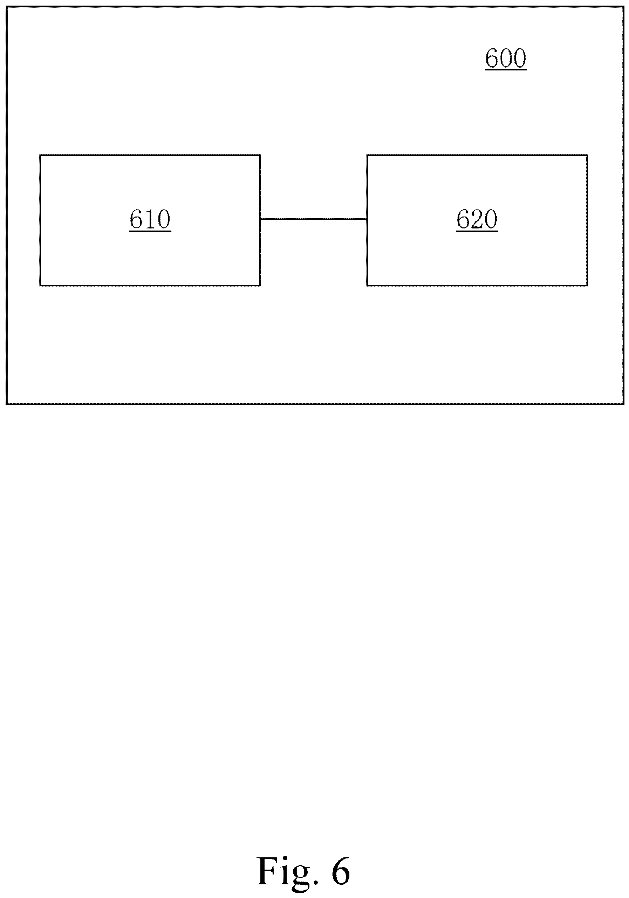

Embodiments of the present application further propose an electronic apparatus 600. Fig. 6 is a schematic drawing of an electronic apparatus 600 according to an embodiment of the present application. As shown in Fig. 6, the electronic apparatus 600 comprises a processor 620 and a memory 610, and an instruction is stored in the memory 610, wherein when the instruction is executed by the processor 620, the method 100 above is implemented.

Embodiments of the present application further propose a computer-readable storage medium, on which a computer instruction is stored, and the computer instruction executes the method 100 above when run.

Some aspects of the method and apparatus of the present invention may be fully executed by hardware, may be fully executed by software (comprising, firmware, resident software, microcode, etc.), or may be executed by a combination of hardware and software. The above hardware or software may all be called "data blocks", "modules", "engines", "units", "assemblies" or "systems". The processor may be one or multiple application specific integrated circuits (ASICs), digital signal processors (DSPs), digital signal processing devices (DAPDs), programmable logic devices (PLDs), field programmable gate arrays (FPGAs), processors, controllers, microcontrollers, microprocessors or a combination thereof. In addition, various aspects of the present invention may be embodied as a computer product located in one or more computer readable medium, this product comprising a computer-readable program code. For example, the computer-readable medium may comprise, but is not limited to, a magnetic storage device (such as a hard disk, a floppy disk, a tape, etc.), an optical disk (such as a compact disk (CD), digital versatile disk (DVD), etc.), a smart card and a flash memory device (such as card, stick, key drive, etc.).

The flowchart used here is to show operations executed by the method according to an embodiment of the present invention. It will be understood that the operations above are not necessarily precisely executed in order. On the contrary, various steps may be processed at the same time or in reverse order. Moreover, other operations may be added into these processes, or a certain step or several may be removed from these processes.

It will be understood that although the present Description is described according to various embodiments, it is not the case that each embodiment only contains one independent technical solution; the manner of recounting of the Description is merely used for clarity, and a person skilled in the art should take the Description as an integral whole, and the technical solutions of the embodiments may also be suitably combined to form other embodiments which may be understood by a person skilled in the art.

The above descriptions are merely particular schematic embodiments of the present invention, and do not limit the scope of the present invention. Any equivalent change, modification or combination made by a person skilled in the art without departing from the concept and principle of the present invention shall fall within the scope of protection of the present invention.

## Claims

1. An anomaly detection method, **characterized by** comprising:
- creating (110) a knowledge graph according to data required to produce a product;
- acquiring (120) measured values of multiple nodes in the knowledge graph in an upstream inspection process;
- according to the measured values of the multiple nodes in the upstream inspection process, calculating (130) a characteristic deviation value of each of the multiple nodes;
- calculating (140) a similarity degree between any two nodes in the knowledge graph; and
- according to the characteristic deviation value of each of the multiple nodes and the similarity degree between said any two nodes, outputting (150) anomaly probabilities of respective nodes by means of a graph neural network.

2. The method as claimed in claim 1, **characterized in that** the step of creating (110) a knowledge graph according to data required to produce a product comprises:
- according to a product composition and a product processing production workflow, creating an ontology;
- by means of performing data fusion on data in a product production process and the ontology, creating a database;
- performing data fusion on multi-source heterogenous data in the database, to obtain data of a unified structure; and
- according to the data of said unified structure, creating a knowledge graph/updating a preset knowledge graph.

3. The method as claimed in claim 2, **characterized in that**
- the product composition comprises:
- various portions of the product composition and an assembly relationship between the various portions of the product composition; and
- the product processing production workflow comprises:
- various devices required for producing a product and a production relationship between the various devices and the various portions of the product composition.

4. The method as claimed in claim 2, **characterized in that** the step of performing data fusion on multi-source heterogenous data in the database comprises:
- receiving a data range chosen by a user, and performing data fusion on multi-source heterogenous data in the data range chosen by the user in the database.

5. The method as claimed in claim 1, **characterized in that** after the step of outputting anomaly probabilities of respective nodes by means of a graph neural network, the method further comprises:
- determining an anomaly path according to the anomaly probabilities of the respective nodes.

6. The method as claimed in claim 1, **characterized in that** after the step of outputting (150) anomaly probabilities of respective nodes by means of a graph neural network, the method further comprises:
- respectively mapping the anomaly probabilities of the respective nodes onto corresponding nodes in the knowledge graph;
- determining a first anomaly node in the knowledge graph, the first anomaly node comprising: a node of which the anomaly probability exceeds a preset threshold value; and
- if a first path of the knowledge graph contains a preset number of first anomaly nodes, determining the first path to be an anomaly path.

7. A detection apparatus, **characterized by** comprising:
- a pre-creation module (51), which is configured to:
- create a knowledge graph according to data required to produce a product;
- an acquisition module (52), which is configured to:
- acquire measured values of multiple nodes in the knowledge graph in an upstream inspection process;
- a calculation module (53), which is configured to:
- calculate a characteristic deviation value of each of the multiple nodes, according to the measured values of the multiple nodes in the upstream inspection process; and
- calculate a similarity degree between any two nodes in the knowledge graph; and
- a prediction module (54), which is configured to:
- output anomaly probabilities of respective nodes by means of a graph neural network, according to the characteristic deviation value of each of the multiple nodes and the similarity degree between said any two nodes.

8. The apparatus as claimed in claim 7, **characterized in that**
- the pre-creation module (51) is further configured to:
- create an ontology according to a product composition and a product processing production workflow;
- create a database, by means of performing data fusion on data in a product production process and the ontology;
- perform data fusion on multi-source heterogenous data in the database, to obtain data of a unified structure; and
- create a knowledge graph/update a preset knowledge graph, according to the data of said unified structure.

9. An electronic apparatus, **characterized by** comprising:
at least one memory (610), which is configured to store a computer-readable code; and
at least one processor (620), which is configured to call the computer-readable code, and execute steps in the method as claimed in any one of claims 1 - 6.

10. A computer-readable medium, **characterized in that** a computer-readable instruction is stored on the computer-readable medium, and when the computer-readable instruction is executed by a processor, the processor is caused to execute steps in the method as claimed in any one of claims 1 - 6.
